# EUROPEAN PATENT SPECIFICATION

(11) **EP 1 283 994 B1**
(45) Date of publication and mention of the grant of the patent: **14.07.2004**
(21) Application number: 01934143.7
(22) Date of filing: 25.05.2001
(51) Int. Cl.: G06F 9/445, H04L 12/28

(54) **RECONFIGURATION MANAGER**
REKONFIGURATIONSVERWALTER
GESTIONNAIRE DE RECONFIGURATION

(30) Priority: 26.05.2000 GB 0012782; 15.09.2000 GB 0022674
(43) Date of publication of application: 19.02.2003
(73) Proprietor: ROKE MANOR RESEARCH LIMITED, Romsey, Hampshire SO51 0ZN (GB)
(72) Inventor: MEHTA, Mehul, Southampton, Hampshire SO16 8DE (GB)
(74) Representative: French, Clive Harry
(86) International application number: PCT/GB2001/002322
(87) International publication number: WO 2001/090890

(56) References cited:
- WO-A-01/02954
- US-A- 5 999 990
- MITOLA J: "TECHNICAL CHALLENGES IN THE GLOBALIZATION OF SOFTWARE RADIO" IEEE COMMUNICATIONS MAGAZINE, IEEE SERVICE CENTER. PISCATAWAY, N.J, US, vol. 37, no. 2, February 1999 (1999-02), pages 84-89, XP000804508 ISSN: 0163-6804

## Description

The present invention relates to a Reconfiguration Manager (RM) for a reconfigurable system, such as a software defined radio (SDR) equipment. An SDR equipment is any piece of equipment incorporating an SDR radio. In one common application, the SDR equipment is a portable SDR user terminal, incorporating a mobile telephony function. In particular, the present invention relates to, and will be discussed with reference to, a reconfiguration manager for a baseband subsystem of a software-defined radio terminal.

The following sources may be relevant to certain parts of the present description, particularly at locations indicated by their reference numeral. [1] http://www.ist-trust.org. [2] N. Drew et al, Reconfigurable Mobile Communications: Compelling Needs and Technologies to support Reconfigurable Terminals, IST Mobile Communications Summit 2000, Galway, Ireland, October 2000. [3] T. Farnham et al, System Aspects of Software Defined Radio within the TRUST project, IST Mobile Communications Summit 2000, Galway, Ireland, October 2000. [4] M. Siebert, "Design of a Generic Protocol Stack for an Adaptive Terminal," Karlsruhe Workshop on Software Radios, March 2000. [5] K. Moessner, S. Vahid, R. Tafazolli, "A Minimum Air-Interface Implementation for Software Radio based on Distributed Object Technology, " IEEE ICPWC 1999.

A software defined radio (SDR) terminal is typically a portable device which can be programmed to perform any of a variety of functions. Some of these may be conventional "communications" functions such as mobile telephone, or internet access whereas others may be less obviously communications related, such as a portable games device/console. This latter may, for example, be configurable by loading games software or updates over the air.

SDR is based on flexible software architecture. This allows radio equipment (e.g. user terminal, base stations etc.) to be reconfigured by downloading and implementing appropriate software. In other words, the radio equipment is software re-definable. As a result, a SDR terminal can operate several different wireless communications standards, and also modify its behaviour whilst remaining in a given standard.

Existing software defined radio terminals are configured according to the requirements of the network, and of the terminal itself. For example, the network may configure the radio according to the capacity metrics of the network, or the air interface characteristics, available bandwidth or available radio spectrum. Typical air interfaces that could be used in such applications include: WAN such as GSM, DECT, UMTS; IEBE802.11a/b; and HIPERLAN/2. The terminal may itself impose certain restrictions on the available configurations, for example, according to its own capabilities, such as its power profile, processing power and memory capacity. Software defined radio terminals may take one of many different formats, for example, they may be hand-held, palm-top, lap-top or desk-top. Each of these will have its own characteristics which will influence the configuration applied to it.

Software defined radio terminals are often set up to include mobile telephony function. Either the mobile terminals or the base station, or both of them, may be a suitably configured software defined radio. However, software defined radio terminals are not limited to such application and may, indeed, be configured as any communicating device.

Current research is focusing on the needs and design of a reconfigurable terminal in the context of a composite radio access environment [1] [2], particularly on commercial wireless communications and reconfiguration of the terminal from one standard to another, e.g., from GSM to HiperLan/2. The present invention may be applicable in the context of the baseband sub-system for the CEC 5th Framework IST TRUST (Transparent Reconfigurable Ubiquitous Terminal) project.

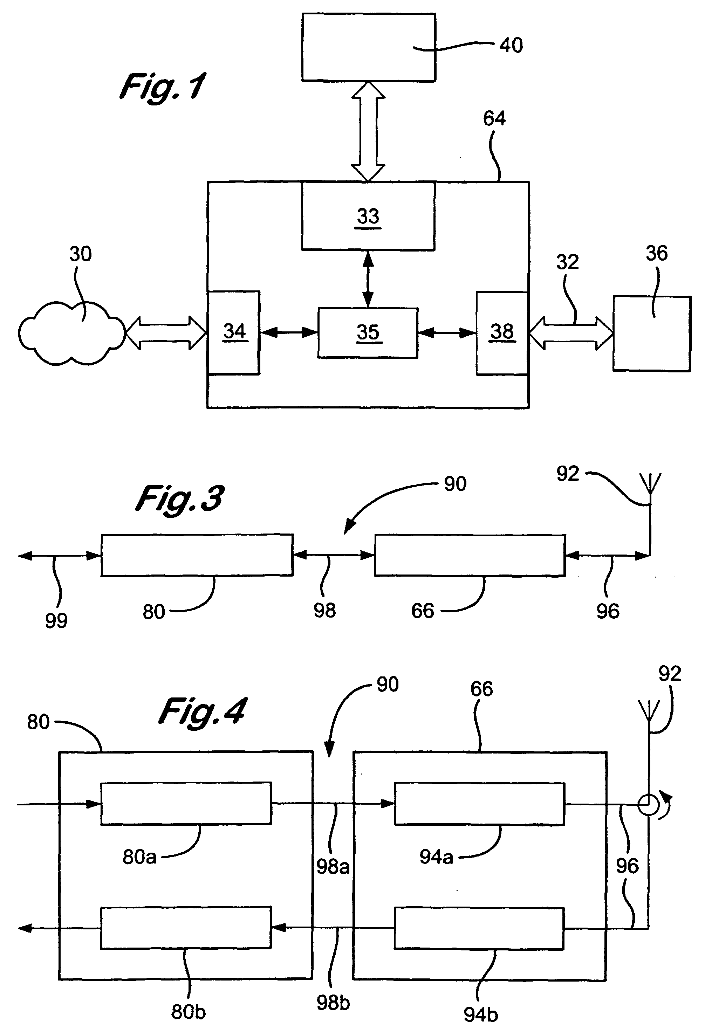

Co-pending UK patent application No. GB 0112736.4, or co-pending International patent application No. PCT/GB01/02378 (WO-A-01/90891), each filed of even date herewith, discloses a management module which may be provided within a software defined radio terminal, to operate the configuration of the terminal according to user, network and terminal requests and constraints. As shown in Fig. 1, the management module (MM) 64 is effectively an intelligent management entity of the SDR equipment. The management module 64 communicates with an associated network 30 through the network interface 34, with the SDR equipment 36 through the equipment interface 38 and with the operator 40 through the operator interface 33. It communicates in accordance with its command and control algorithms 35. The associated network may be internal to the equipment of which the MM 64 forms part, or may be an external network, of which the equipment forms part.

Management module MM 64 is linked to the associated SDR equipment 36 by an equipment interface 38 carrying signals 32. Both the management module and the SDR equipment may be respectively implemented in either hardware or software. Operator interface 33 defines formal procedures for signalling and control to/from the operator 40, which may be man or machine.

Communication with the operator 40 may include operator interface control, re-configuration requests and acknowledgements, operator profiles, application and quality of service control, and power management such as user interrupt and signalling functions.

Communication 32 with the SDR equipment 36 may include power management, re-configuration negotiations and administration, terminal mode control, software download control, terminal application control, run-time control signalling, terminal class (capability list) and terminal resources (RF, input/output, hardware).

Communication with the network 30 may include higher layer signalling, network negotiations, power management, re-configuration management and administration, run-time control signalling, mode control and software download.

All of the entities operator 40, network 30 and terminal 36 may request reconfiguration.

The management module 64 defines the functionality, behaviour and state of the whole reconfigurable system, comprising the management module itself, the associated equipment 36, the network 30 and the operator 40. It administers reconfiguration, including all the associated network and radio signalling and control mechanisms. In addition, it provides formal procedures for handling and implementing command and control signals from the operator (equipment user), the network, and the equipment itself. In the above referenced UK and International patent applications, there is disclosed a management entity which allows the user to reconfigure the terminal as he desires, as and when required.

The present invention provides a novel software architecture of a baseband sub-system for a Software Defined Radio equipment. The architecture is flexible, such that it can reconfigure itself in response to operator or system (network or equipment) reconfiguration requests, upon the availability of appropriate software.

Certain embodiments use an object-oriented approach, whereby the functionality of a given baseband module can be changed by instantiating appropriate classes. The formulation of baseband classes and their associated attributes will be discussed in relation to certain embodiments of the present invention. In the described embodiments, a higher authority, management entity 64, is assumed, to regulate, administer and manage bascband reconfiguration. This entity, together with the signalling required to perform reconfiguration, is briefly described above, and an example of such entity is further discussed in the UK and International patent applications referenced above.

Herein, "layers" refers to the conceptual layers of a communications protocol, for example the seven-layer OSI reference model, of which the lowest layer is the physical layer, dealing with the transmission of bits to and through a physical medium, while the highest layer is the application layer, which comprises the overall application as seen by the user and miscellaneous protocols for common activities.

The software architecture of the present invention is not restricted to the baseband sub-system. The concept of changing the functionality, behaviour, and interfaces of a certain processing unit, by instantiation of appropriate classes within an Object-Oriented (OO) design, may also be equally applicable to higher layers (i.e., above the physical layer) [4], [5], and to other subsystems within the physical layer, such as the RF subsystem.

From the baseband perspective, there are two types of reconfiguration. Both of these reconfiguration scenarios are possible under the system of the present invention, and both will be described further with reference to the present invention.

Total reconfiguration is reconfiguration from one standard to another, i.e., inter-standard reconfiguration. For example, from GSM to UMTS. This reconfiguration corresponds to exhaustive changes in the functionality, behaviour, and interfaces of the constituent modules.

Partial reconfiguration is a reconfiguration without changing the operating standard, i.e., intra-standard reconfiguration. For example, if the reconfigurable system is defined in terms of configurable software modules, a partial reconfiguration may be one in which one or more modules are reconfigured, for example, in order to improve quality of service whilst remaining on the current operating standard.

According to an aspect of the invention, there is provided an adaptive baseband subsystem which is reconfigurable, for example, using a reconfigurable baseband software as described below.

According to an embodiment of the invention, a reconfiguration manager (RM) is provided. It defines formal procedures and control mechanisms for reconfiguring the baseband sub-system of a reconfigurable system such as a SDR terminal. The RM provides an overall physical layer interface with the higher layers which may themselves be controlled by a management entity such as the Management Module (MM) discussed above.

The reconfiguration manager may implement run-time signalling and reconfiguration protocols at baseband.

The baseband sub-system of a SDR terminal is inherently flexible, such that the functionality, behaviour and the interfaces of the constituent modules can be reprogrammed by software. The baseband is re-definable by software, and is therefore also referred to as the Reconfigurable Baseband (R-BB). The potential capability to reconfigure the baseband from one standard to another (e.g., GSM to UMTS), and also, to change its behaviour within a given standard is the objective of a reconfigurable baseband sub-system.

The present invention therefore provides methods and apparatus as defined in the appended claims.

A reconfiguration manager as specified in the precharacterising part of claim 1 is disclosed in US-A-5,999,990.

The above, and further, objects, characteristics and advantages of the present invention will be further described with reference to certain embodiments, given by way of examples only, in conjunction with the accompanying drawings, in which:
Fig. 1 represents a management module for a software defined radio equipment, as discussed above;
Fig. 2 shows a schematic diagram of a reconfigurable baseband (R-BB) subsystem according to an embodiment of the present invention;
Figs. 3-4 schematically show physical layers of general radio equipment;
Fig. 5 illustrates chains of software blocks used in the physical layer of a radio equipment according to an embodiment of the present invention;
Fig. 6 schematically illustrates the structure of a baseband processing cell according to an aspect of the present invention; and
Fig. 7 shows a state transition diagram for partial and total reconfiguration according to embodiments of the present invention.

In order to manage and administer baseband reconfiguration, a management entity is required for the R-BB to implement protocols for reconfiguration and regulate appropriate signalling to/from the baseband and also within it. This role may be fulfilled by the reconfiguration manager (RM) of the present invention.

The RM according to the present invention has the following features.

It is the overall authority of the physical layer.

It provides a formal interface for the physical layer with the upper layers.

It controls the baseband and RF sub-systems.

It negotiates reconfiguration requests with the SDR terminal's equipment authority (EA), which may be a management module (MM) as discussed above.

It carries out a RF capability list as part of the reconfiguration request negotiations.

It calculates the complexity of a given reconfiguration request.

It administers baseband reconfiguration following successful completion of negotiations with the EA.

It interacts with the Software Download Module (SDM) of the terminal for downloading new software.

It maintains a local library of the baseband software. The library includes the baseband configuration map. This is the overall baseband module identity, interface, and inter-connection definition list for the standard operating on the terminal.

It validates the reconfigured baseband transceiver chain before switching it on.

It implements incoming higher layer signalling to the baseband.

It monitors the run-time performance and status of baseband modules.

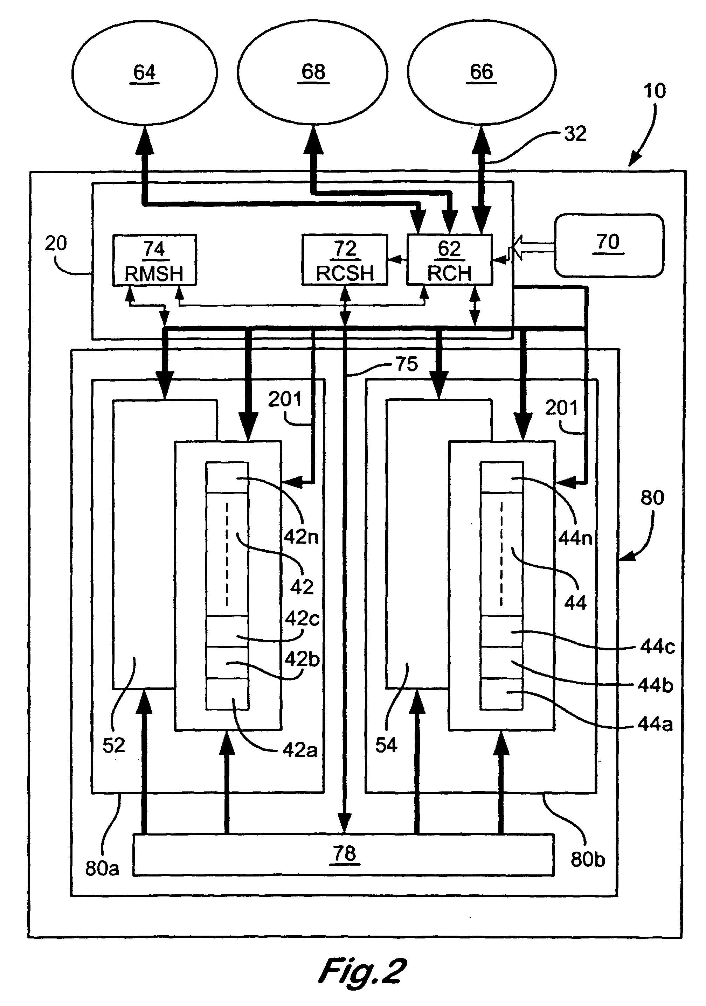

Fig. 2 shows a schematic diagram of a reconfigurable baseband (R-BB) subsystem 10 according to an embodiment of the present invention. Reconfiguration Manager (RM) 20 is the overall authority of the R-BB sub-system. It is responsible for negotiating reconfiguration, creating active and shadow transceiver chains, and controlling the run-time behaviour of each module. The RM 20 also controls the RF sub-system 66 through appropriate signalling 32, making it the overall physical layer authority.

Figure 2 schematically shows a RM 20 consisting of three units, namely, a reconfiguration handler (RCH) 62; a run-time control signalling handler (RCSH) 72 and a run-time monitoring and status handler (RMSH) 74.

The re-configuration handler RCH 62 deals with baseband reconfiguration. Any signalling and negotiations related to reconfiguring any part of the baseband will be handled by this entity. It is in communication with the equipment authority (EA) 64, the RF subsystem 66, the software download module 68, the software library 70, the RMSH 74, the RCSH 72, and a receive-transmit baseband module chain 80.

The run-time control signalling handler RCSH 72 is responsible for implementing higher layer signalling and control signalling at the baseband. This unit deals with run-time signalling, which will be standard specific. However, it will also receive signals from the RCH 62 in order to regulate the behaviour of the baseband while it is being reconfigured. This will lead to modifications in the run-time control signalling. The RCSH 72 is in communication with the equipment authority 64, the baseband module chain 80 and receives signals from the RCH 62.

The run-time monitoring and status handler RMSH 74 implements run-time status requests on the baseband subsystem 80 and reads in the respective acknowledgements. In the illustrated embodiment, the baseband subsystem is made up of constituent baseband modules. The RMSH therefore has a supervisory role to oversee the run-time behaviour of each baseband module. In addition, it also collates auxiliary outputs from the baseband subsystem and reports it to the equipment authority EA 64. Accordingly, it is in communication with the equipment authority 64, the RCH 62 and the baseband subsystem 80.

The reconfiguration manager 20 is the overall authority of the physical layer, that is, the part of the system that is directly involved in the transfer of data, for example in the form of binary digits. In the example system described above, the physical layer may comprise the baseband subsystem 80, itself comprising module chains 42, 44, 52, 54, and an RF subsystem 66.

The equipment authority (EA) 64 has overall authority for the whole SDR equipment, and so has an over-riding authority over the reconfiguration manager 20. The equipment authority (EA) referred to in this description may correspond to the management module (MM) discussed elsewhere.

To perform a reconfiguration of the physical layer, that physical layer will have to be defined in functionality descriptions. The actual implementation of the functions described herein is of minor importance, and a suitable implementation of any of the described functions will be apparent to one skilled in the art. However, the presently described aspect of the present invention describes novel and inventive combinations of functionality and interfaces, behaviour and features.

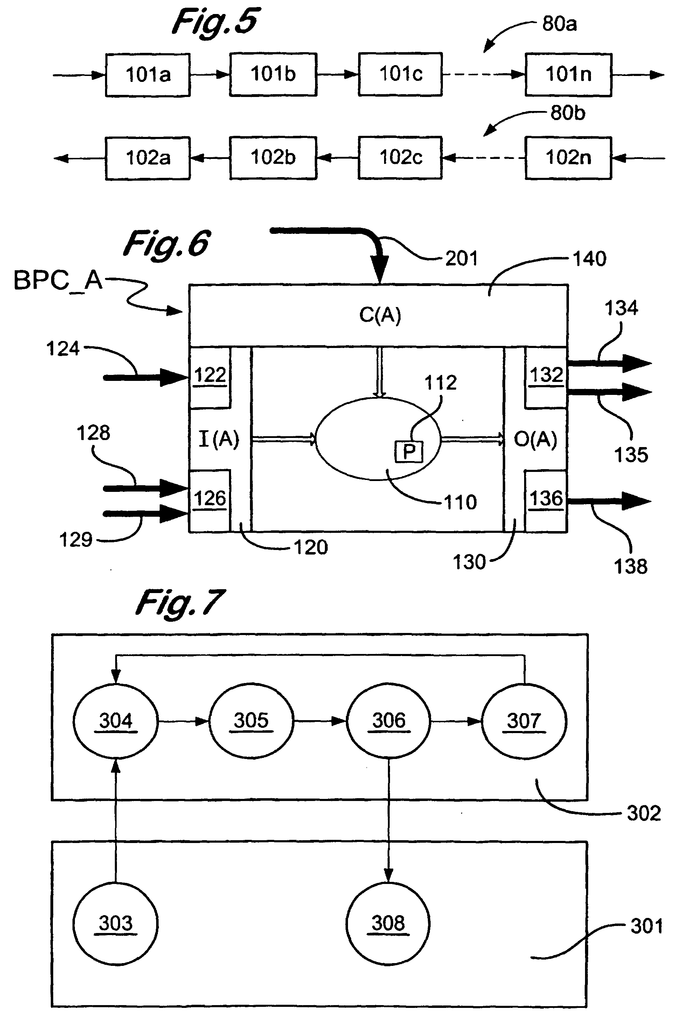

As shown in Fig. 3, any radio equipment, such as an SDR terminal, which transmits and/or receives digital data over RF signals, will include a physical layer 90 comprising an antenna 92, an RF subsystem 66 and a baseband subsystem BB 80. Radio signals 96 received by the antenna 92 are converted by the RF sub-system 66 into a baseband signal 98, and the baseband subsystem 80 extracts the required data 99 for supply to the remainder of the equipment. Similarly, in the opposite sense, data 99 for transmission is sent to the baseband subsystem 80 which generates a corresponding baseband signal 98, which is itself then forwarded to the RF subsystem 66 for encoding onto a radio signal 96 for transmission from the antenna 92.

Fig. 4 illustrates a typical physical layer sub-system 90 for a SDR terminal, in greater detail. As can be seen in the figure, the receive and transmit paths are substantially separate, and may combine at the antenna. The transmit 94a and receive 94b RF subsystems are each tuneable in software. They receive and supply, respectively, baseband signals 98a, 98b from/to transmit, and receive, baseband subsystems 80a, 80b which may be embodied within a DSP (digital signal processor).

As shown in Fig. 5, according to another aspect of the present invention and as illustrated also in Fig. 2, each of the transmit and receive baseband subsystems 80a, 80b may be composed of a number of modules 101a- 101n; 102a-102n in series, each of which may be loaded with a selected software block. The subsystems 80a and 80b may then be referred to as receive and transmit baseband module chains. Each of the modules may be loaded with a downloaded software block, received over the air interface by the SDR terminal equipment, or previously stored in software library 70 of the SDR terminal equipment.

The software download module (SDM) 68 is provided to control the downloaded software blocks.

An example of the reconfiguration that may be applied to the baseband system is the conversion from the GSM standard, which operates at 900MHz with a 2kHz channel, to the UMTS standard which operates at 2.5GHz with a 5MHz channel. In the case of such reconfiguration, all of the processing algorithms will need to be changed, meaning that the SDR terminal, and particularly the RF and baseband subsystems 66, 80, would need to be reconfigured.

RCSH 72 performs all the required signalling, including control signalling to and from the base station, timing slots etc. The RCSH 72 implements the control signalling required by the agreed air interface, that is, the air interface agreed for use by the user and the network. The RCSH 72 handles all signalling, but is not involved in data transmission. The coarse features of the data processing are regulated by this signalling.

The RMSH 74 performs the internal monitoring of all baseband 80 and RF subsystem 66 operations. It checks on each software block 101, 102 of the baseband chains, monitors features such as operation and power consumption, and reports its findings to the EA 64, which may then decide to send a request for reconfiguration to the reconfiguration handler.

Whilst the flexible architecture of SDR terminals is typically restricted in its scope to the baseband sub-system, it is conceptually suitable for reconfigurable higher layers as well, assuming a conventional modular protocol stack. In an alternative embodiment, the flexible architecture according to the present invention may be applied to reconfiguration of the RF subsystem 66.

A system is 'adaptive' if it has the ability to reconfigure itself. The baseband according to certain embodiments of the present invention is adaptive.

There follows one example of one embodiment of a software architecture according to the present invention, such as for a reconfigurable baseband (R-BB) sub-system is based on Object-Oriented methodology.

Each module 101,102 of the baseband transceiver chain 80 is reconfigurable by instantiation of an appropriate class and/or re-initialisation of module(s) with new attributes (parameters). It is assumed that the software (i.e. class) of each module (e.g. modulator, FEC decoder, etc.) is available (downloaded and stored in the baseband (software) library 70), error free, and compatible. The software download module (SDM) 68 of the SDR terminal is responsible for ensuring that the correct software is downloaded. This is done by setting appropriate parameters that are associated with required software.

Parameterisation of baseband modules is an integral part of the reconfiguration management, in order to set up accurate download requests.

In order to reconfigure the baseband transparently, i.e., without affecting the incumbent services, the baseband architecture must support dynamic creation and binding of new/modified modules. In other words, the baseband architecture must support change in the functionality, behaviour, and the interface of baseband modules on demand without affecting the current operation.

As a result, instantiation of downloaded classes must be administered through dynamic binding, whereby the required functionality of a given class is only made available at run-time, whilst the structure of the downloaded class is known a priori. The software download module 68 of the SDR terminal is responsible for ensuring that the correct software is downloaded. Parameterisation of baseband module classes allows different objects to be derived from the same downloaded class depending upon the agreed new reconfiguration.

Leaf classes are the software blocks which can be used in each of the modules 101, 102. They are downloaded by the software download module 68 and stored in the library 70. The software download mechanism needs to ensure that the properties of the leaf classes are compliant with the terminal (type, hardware, user profile, etc.), the standard and the configuration map. Once the leaf class is downloaded and available, the RM 20 will use its valid parameter list to instantiate the required object, and create the required modules 101, 102.

Referring again to Fig. 2, and according to an aspect of the present invention, each of the transmit 80a and receive 80b baseband chains comprise an active chain and a shadow chain. Overall, therefore, baseband transceiver chain 80 comprises an active transceiver chain and a shadow transceiver chain.

The active baseband transceiver chain is the currently operating baseband chain, and comprises an active baseband transmit chain 42 and an active baseband receive chain 44.

Each active chain consists of several modules 42a to 42n; 44a to 44n, and each module may contain a Baseband Processing Cell (BPC), according to a further aspect of the present invention, described in further detail below. These modules correspond to the modules 101,102 of Fig.5.

The shadow baseband transceiver chain is the post-reconfiguration baseband transceiver chain. That is, it is a baseband transceiver chain which is prepared according to a requested configuration, and will become the active chain once the reconfiguration is activated. It comprises shadow baseband transmit chain 52 and shadow baseband receive chain 54. Rather than duplicating software blocks such as BPCs which are to remain unchanged during reconfiguration, the shadow baseband transceiver chain contains references (pointers) to blocks (BPCs) that are to remain unchanged from the active chain, along with one or more new or modified blocks (BPCs).

The shadow transceiver chain 52, 54 is arranged to comply with a reconfiguration strategy which has been agreed by all of the system components involved in the reconfiguration. The shadow chain 52, 54 does not interfere with the active chain 42,44. The constituent processes are kept mutually independent.

In an embodiment of the present invention, each baseband transceiver chain 42, 44, 52, 54 is made up of several software blocks such as 42-1 to 42-n and 44-1 to 44-n. Each of these blocks may, according to an aspect of the invention, be a baseband processing cell (BPC). The BPC is a fundamental building block of any (active or shadow) transmit-receive baseband chain.

A BPC class is a generic data processing entity. The process class gives the functionality of a BPC object. Several instantiations of the BPC class yields the constituent modules 42a-42n; 44a-44n of the transceiver baseband chain.

According to an aspect of the invention, each BPC object (modules 42a-42n; 44a-44n) includes set of Input Ports, I, a set of Output Ports, O, Control Methods, C and a virtual process function which implements an instance of the downloaded class. This will be further discussed with reference to Figure 6.

Baseband software library 70 contains active and shadow baseband configuration maps. These correspond to the active and shadow transceiver chains respectively. A configuration map is a list of baseband modules (e.g. baseband processing cells - BPCs) with process definition of each, including type, functionality, algorithmic identity etc., together with interface definitions and interconnections of each BPC. Each baseband configuration map represents the overall definition of the respective baseband, and is a piece of software in itself, which is downloaded when a new standard is to be implemented. In addition, the library 70 will also store all the baseband module classes (the software blocks used, e.g. BPCs) that are currently in use and those that were used previously.

In order to maintain terminal integrity, the library 70 must store either one or both of the following: (a) a 'read-only' default configuration map together with all the associated module classes and parameter lists, which allows the baseband to confidently reconfigure to a known, working standard, which is compliant with the user profile; and (b) a complete copy of the previously working baseband configuration. This latter should include the configuration map, associated baseband classes, parameter lists, operating standard, host network registrations etc. Such a store would allow the terminal to return back to a fully working baseband configuration, without requiring a power off reset.

Reconfiguration switch 78 implements the ON/OFF switch signal 75 from the RM 20, in order to switch the shadow chain 52, 54 ON and the active chain 42, 44 OFF. The shadow chain thereby becomes a new active chain, and the former active chain becomes a shadow chain, ready to be over-written with a new shadow configuration.

Several wireless standards may be studied to derive the baseband processing cells, BPCs or classes. These standards may include GSM, EDGE, UTRA-TDD, UTRA-FDD, HIPERLAN/2 DECT, and BLUETOOTH.

According to certain embodiments of the present invention, the formulation of baseband module classes is based on an object-oriented approach. Such formulation aims to identify classes which, when instantiated with appropriate attributes, will help yield the required baseband functionality in conformance with the configuration map of the standard under operation.

In deriving such BPCs or classes, the following procedure may be adopted. A hierarchical inheritance tree is assumed. The base class of this tree is the Process Class and it provides a virtual method for processing data. It resides at the top of the inheritance tree. Underneath the Process class are classes such as the Parity Check Class, FEC Encoder Class, Modulation Class and so on. The levels of abstraction (i.e., the levels of sub-classes underneath the Process Class) may be developed to suit the desired application. It should be noted that these node classes are abstract, while the leaf classes (i.e., those at the end of the inheritance tree) are the ones that are downloaded as BPC objects or classes.

Examples of leaf classes (BPC objects) include CRC check class, Phase Modulation class, and Convolutional Encoder class. Each leaf class has an associated list of attributes (parameters), which are used to instantiate different objects.

Table 1 illustrates some examples of first level of parameters for typical baseband modules, that is, typical baseband leaf classes. These parameters may be extended into organised lists, which can be accessed by the use of an appropriate key.

**Table 1**

| Baseband Module | Constituent Leaf Class | Attributes |
|---|---|---|
| Parity check | CRC check Class | Crc Polynomial, c(x) Crc Size, p |
| FEC Encoder | Convolutional Encoder Class | Constraint length, k Galois field polynomial, G(p) |
| Modulation | Phase Modulation Class | Bits per Symbol, n Angle, θ |

Leaf classes (BPC objects) are very specific in their algorithmic detail, yet generic enough to derive unique run-time behaviour and performance through appropriate parameter settings at instantiation.

Object oriented techniques may be used to derive leaf classes through algorithmic abstraction of different baseband modules. This allows different software objects (modules 42a-42n; 44a-44n) to be instantiated on demand by using the same downloaded leaf class. In other words, different versions of the same algorithm can be generated by instantiating the leaf class with appropriate parameters. This enables very efficient storage in software library and avoids repeated downloads of similar software blocks.

The full extent of valid parameters for a given leaf class will depend on the degree of abstraction, and the range of standards which it can be used under, and computer simulations are preferably employed to derive them.

in order to ensure that the correct leaf class is downloaded by the software download module 68, appropriate parameters must be set. These may form the header of the software that is to be downloaded. In addition to algorithmic parameters, each leaf class has an associated property list. This is very important since the SDR terminal's software download mechanism will need to ensure that the software is compatible in its form, fits the agreed configuration map (standard), and provides the desired functionality.

Examples of typical parameters and their associated sub-parameters for baseband software are,
1. Implementation details
   a. Fixed or Floating point
   b. Hardware features such as processor type, speed, memory requirements
   c. Language, such as C, JAVA, VHDL
2. Performance details
   a. Power consumption for a given hardware
   b. Benchmark results for qualitative appraisal
3. Standard
   a. Identity of the wireless standard that the software is compatible with
   b. Parameters of the configuration map
4. Vendor
   Software manufacturer identity for compliance check with the terminal manufacturer
5. Version
   Version of software, Parity check sum.

These parameters are used by the run-time control signalling handler 72 to ensure that the downloaded leaf class is compatible with the SDR terminal in terms of implementation, performance, standard, vendor authentication and reliability, and version. This check is preferably performed before a software module is stored into the software library 70. It is assumed that the overall terminal management entity EA 64 will be responsible for setting up these parameters, so that the downloaded baseband code is in the correct form, fits with the configuration map and yields the desired performance.

The above-mentioned parameter types may be extended according to the needs of particular wireless communication standards.

Figure 6 illustrates an example of a software block, being a BPC object BPC_A. The algorithmic functionality of BPC_A is defined by the process function 110, which in turn can be configured by its attributes, p 112. Note that p 112 is a list of attributes of the leaf class used to instantiate the process function 110.

As shown in Figure 6, the object BPC_A, contains input ports, I(A) 120 and output ports, O(A) 130. Each port has a unique name, type, and data rate. Synchronous and asynchronous inputs and outputs are provided.

The input ports I(A) 120 comprise a synchronous input port 122 which receives input data 124, and an asynchronous input port 126 which receives runtime status request 128 and runtime signalling 129 inputs. The output ports O(A) 130 comprise a synchronous output port 132 which provides output data 134 and auxiliary outputs 135, and an asynchronous output port 136 which provides a runtime status acknowledge output 138.

The BPC class BPC_A also includes a set of control methods C(A) 140, and they define the state of the BPC object. The process function 110 is in communication with the input and output ports, and the control methods. The RM 20 regulates the state of each BPC object by issuing appropriate signals 201 to the BPC object.

Valid states of each BPC object are illustrated in Figure 7, and include: RUN 305, where the BPC object is processing data as intended; SUSPEND 306, where data is not processed by the BPC object but the object is in a suspended state and is awaiting signal from RM 20 to resume operation; RESUME 304, where data is not output from the BPC object, but the object is awaits signals 201 from the RM 20 to find the correct timing and synchronisation for it to start operating the newly formed BPC object; RESET 307, where the process function within the BPC object is undergoing re-instantiation wherein the BPC object is not destroyed, but instead changes are made to the process function of the object; INITIALISE 303, where a new BPC object is created; and KILL, where the referred BPC object is to be destroyed and so the BPC object will delete the process function within it.

Note that data could be output from the BPC object while in suspend state, provided the functionality of the process function within it supports such an action.

In short, each BPC object performs some digital signal processing, and the type of processing is defined by the particular instantiation of the process class. In turn, a process class can be viewed as a generic data processing class whose algorithmic detail is provided by the leaf classes.

Figure 7 shows the two levels of reconfiguration 301, 302, which can be attained for a given BPC object. The first level 301 relates to the creation and destruction of BPC objects, while the second level 302 relates to the operation and reconfiguration of an individual BPC object.

There will now be described certain examples of methods of state transitions of BPC objects, that is, how a BPC object is created and then reconfigured. The two different types 301, 302 of reconfigurations are considered for a BPC object. To aid understanding of the processes involved, pseudo-C++ code is given for each step.

In the following example, it is assumed that the BPC object is a Convolutional Encoder.

At step 303, INITIALISE', the RM 20 creates a new BPC object, of identity _id, by instantiating the appropriate BPC class. Pseudo-C++ code for this is:
BPC_id = new BPC (Input port addresses, Output port addresses).

The Convolutional Encoder leaf class code is then read from the software library 70. The RM 20 will create a virtual pointer in its memory and reserve some memory for the new object, which will be instantiated from the class.

The RM 20 will then create a new process function for the new BPC object by issuing the INITIALISE signal. Pseudo-C++ code for this is:
BPC_id. INITIALISE (new Convolutional Encoder(k1, G1(p))),
where k1 is the constraint length of the code, and G1(p) is the Galois field polynomial. These are the attributes of the Convolutional Encoder Class. Note that, INITIALISE' 303 is a member method of the BPC class. Once the BPC object has been initialised, it is then placed by the RM 20 in its appropriate place, as defined by the configuration map.

The RM 20 will then put this new BPC object in RESUME state 304, which implies that the BPC object is almost ready to operate. The RM 20 will determine the correct timing and synchronisation in order to start running the newly created BPC object. Pseudo-C++ code for this is,
BPC_id.RESUME().

Once the RM 20 has established an appropriate time and synchronisation, it will run the new BPC object and place it in the RUN state 305 by issuing appropriate signals 201. Pseudo-C++ code for this is,
BPC_id.RUN().

Supposing that this BPC object is to be reconfigured by changing the process function within it. The behaviour or functionality of the convolutional encoder is to be changed without destroying the BPC object. It will remain a convolutional encoder. Such reconfigurations are typical of the type termed Partial Reconfiguration' 302.

For such instances, firstly, the RM 20 will make a pointer reference of the BPC object in the shadow chain 52, 54, i.e., *BPC_id. It will then SUSPEND the *BPC_id by placing it in the SUSPEND state 306. Pseudo-C++ code for this action is,
*BPC_id.SUSPEND().

Next, the RM 20 will place the BPC object in the RESET state 307, and will perform a reset operation on the BPC object by instantiating a new process function. The new process function implies that there is no change in the input/output ports of the object *BPC_id, but simply a change in the resident data processing entity, process 110. Pseudo-C++ code for this action is:
*BPC_id.RESET(new Convolutional Encoder(k2, G2(p))),
where k2, G2(p) are the new attributes (parameters) of the process.

Finally, once the BPC object has been RESET, the RM 20 will then put it in RESUME state 304 as discussed above. The RM 20 will next issue a switch ON signal 75 to the reconfiguration switch 78 which will make the shadow configuration active, that is, the active and shadow chains will swap over. Once that is done, the RM 20 will put the reconfigured BPC object in RUN state 305 as discussed above.

Now consider that a new type of FEC encoder (Convolutional Encoder) is required and that the incumbent BPC object is to be replaced by a new BPC object with new input/output ports 120, 130 and a new process 110 within it. Such reconfigurations are typical of the type termed Total Reconfiguration' 301.

For such instances, the RM 20 will firstly SUSPEND the BPC object in the shadow chain, placing it in state 306 (similarly to the corresponding step in partial reconfiguration discussed above). The RM 20 will then remove the shadow BPC object by issuing a KILL signal. The KILL signal will move the BPC object into the KILL state 308 and will only destroy the process function within it. Once that is successfully completed, the RM 20 will delete the BPC object completely by issuing appropriate signals 201. Pseudo-C++ code for this action is:
BPC_id.KILL(), and then, delete BPC_id.

The RM 20 will replace the killed BPC object with a new one in the shadow chain, which it created in the background by following the steps INITIALISE' to RUN', as described above.

In order to administer reconfiguration, a significant amount of negotiation and management protocols should be maintained. The type of protocols and signalling needed to reconfigure the baseband in a transparent manner are discussed in the following list of steps, which explain how baseband reconfiguration is initiated, and managed at the baseband in an architecture according to an embodiment of the present invention. Many of the following steps apply to reconfiguration according to the present invention, independently of the possible use of object-oriented techniques, and will apply similarly if software blocks other than BPCs are used.
1. The RM 20 accepts a reconfiguration request from the terminal's equipment authority EA 64, e.g., a Terminal Management Module (TMM)[3]. The request includes information such as,
   - which BPC objects to reconfigure;
   - how to reconfigure them;
   - configuration map changes;
   - run-time control signal changes/modifications.
2. The RM 20 then negotiates the reconfiguration request with the terminal's management entity, that is, equipment authority EA 64. This includes details such as
   - complexity of reconfiguration;
   - processing and memory requirements; and
   - time duration for reconfiguration.
3. The RM 20 will perform a RF capability check by referring to the RF property list. It should be noted that the RM is the overall authority of the physical layer and it will control the RF subsystem 66 through appropriate signalling 32.
4. The terminal's equipment authority EA 64 will instruct the RM 20 with a list of BPCs identities to be reconfigured, how to reconfigure them and when to reconfigure them.
5. The RM 20 instructs the terminal's equipment authority EA 64 if new software needs to be downloaded, or whether it intends to use the already present software from its local library store 70.
6. The terminal's equipment authority EA 64 instructs the software download module (SDM) 68 if new software needs to be acquired and then instructs the RM 20 when that is available.
7. The RM 20 reads the necessary software from the baseband software library 70. This could be either the newly downloaded code or at that already present.
8. The RM 20 then creates the shadow transceiver chains 52, 54. The shadow chains contain the new baseband modules and pointer references of the unchanged modules, which are intended to remain from the active baseband chain.
9. The RM 20 then validates the shadow chains such that they comply with the agreed configuration map in terms of interfaces between neighbouring BPC objects and their input/output ports.
10. Once the RM 20 has successfully configured the shadow chains, it will then instruct the RF sub-system 66 to re-tune its filters.
11. While the RF sub-system 66 is being reconfigured, the RM 20 sends appropriate SUSPEND and KILL 201 signals to the respective BPCs of the active chains 42, 44. The state transition of BPC objects is then carried out as explained earlier with reference to Fig. 7.
12. The RF sub-system 66 will send an acknowledgement back to the RM 20 after it has successfully reconfigured (e.g. by retuning its filters). In addition, when the active BPCs have been suspended, and successfully killed where required, then the RM 20 will be in a position to switch the shadow chain ON. The reconfiguration switch 78 implements the ON signal 75, to promote the shadow chain to become the active chain; and to move the former active chain to become the shadow chain in preparation for a next reconfiguration.

It has been shown that the timing of this ON signal 75 needs to be authorised by the equipment authority EA 64 in order to maintain network and standard (e.g. GSM, UTRA, DECT) compliance. This is because baseband reconfigurations at the terminal imply corresponding changes at the base station, to which the host network must agree. That can only be possible if the standard under operation permits such flexibility, and has provision for the associated signalling.

The present invention therefore provides a reconfiguration manager 20 for a reconfigurable system; a reconfigurable baseband sub-system R-BB 10; and a reconfigurable software block in the form of a baseband processing cell BPC.

Certain embodiments based on an Object-Oriented rationale have been presented, whereby new baseband modules are created by instantiating appropriate classes. New baseband module classes are preferably downloadable software entities. The management and regulation of the baseband sub-system is the responsibility of the RM 20 of the present invention. The RM is responsible for reconfiguration and run-time behaviour of the whole physical layer, including the baseband sub-system R-BB 10. The RM also interacts with the RF sub-system 66 to check for RF capability, with the EA 64 to negotiate reconfiguration, and with the Software Download Module 68 for acquiring new software.

The baseband transceiver chain 80 is made up of constituent BPC objects 101,102; 42,44. Each BPC object provides a unique functionality. The latter is defined by the downloaded classes, which are instantiated within a BPC object. The configuration map defines the baseband chain in terms of functionality of constituent modules and their interfaces and inter-connections. The RM 20 uses this map to create and then connect the different BPC objects. According to an aspect of the present invention, and in order to reconfigure the baseband, the RM creates a shadow baseband chain 52, 54 in compliance with the agreed configuration map for reconfiguration. The switch between the active and shadow is implemented by the RM under the authority of the EA.

While the foregoing description provides certain embodiments of the present invention, by way of examples only, numerous modifications and improvements may be made, within the scope of the present invention as claimed. The following improvements are proposed by the inventor.

The interface between baseband 10 and RF 66 sub-systems may be redefined. Different RF architectures may be considered. The extent of digital signal processing (DSP) incorporated within the R-BB will define the range of different BPC objects needed to operate a given standard, representing a trade-off between the number of BPC objects which must be downloaded, versus the cost implications of increased DSP.

The R-BB software architecture may be verified by simulations. Issues of particular relevance are: reconfiguration protocols and signalling; mode switching between different baseband configurations as stated by trial configuration maps; and BPC state management. For the sake of modelling, R-BB 10 will assume the RF sub-system 66 as a software entity, i.e., a class. Instantiations of this class, with appropriate parameters, will allow different RF sub-systems to be created, in software. This exercise is anticipated to help fine-tune the R-BB design by simulating different RF sub-systems. The parameter list for such a class could then be used to derive the RF capability list for the implemented version.

The structure and organisation of baseband software (configuration maps, baseband module classes, and associated parameter lists) within the R-BB library may be modified, as will be apparent to one skilled in the art, without departing from the scope of the present invention as defined in the appended claims.

## Claims

1. A reconfiguration manager for controlling the reconfiguration of a reconfigurable system, comprising:
- a reconfiguration handler (62) for receiving reconfiguration instructions from a higher authority (64);
- a run-time control signalling handler (72) responsible for implementing reconfiguration of the reconfigurable system; and
- a run-time monitoring and status handler (74) for implementing status requests on the reconfigurable system, and for reading acknowledgements and status information from
**characterised in that** the reconfiguration manager comprises an active software module chain, representing the current configuration, and a shadow software module chain, representing a future reconfiguration,
and **in that** the reconfiguration manager further comprises a reconfiguration switch (78) operable to switch the shadow chain (52, 54) ON and the active chain (42, 44) OFF, the shadow chain thereby becoming a new active chain, and the former active chain becoming a shadow chain, ready to be replaced with a new shadow configuration.

2. The reconfiguration manager of claim 1 wherein the reconfiguration handler (62) deals with reconfiguration of the reconfigurable system, including related signalling and negotiations; and is in communication with the higher authority (64).

3. The reconfiguration manager of claim 1 or claim 2 wherein the run-time control signalling handler (72):
- implements higher layer signalling and control signalling;
- deals with run-time signalling, which will be standard specific;
- receives signals from the reconfiguration handler (62) in order to regulate the behaviour of the reconfigurable system while it is being reconfigured;
- provides modifications in the run-time control signalling; and
- is in communication with the higher authority (64), the reconfigurabJe system (80) and receives signals from the reconfiguration handler (62).

4. The reconfiguration manager of any of claims 1-3 wherein the run-time monitoring and status handler (74):
- implements run-time status requests on the reconfigurable system (80);
- reads in the respective acknowledgements;
- oversees the run-time behaviour of the reconfigurable system;
- collates auxiliary outputs from the reconfigurable system;
- reports to the higher authority (64); and
- is in communication with the higher authority, the reconfiguration handler (62) and the reconfigurable system (80).

5. The reconfiguration manager of any preceding claim wherein the reconfigurable system comprises a chain of reconfigurable software modules, and the reconfiguration comprises one of:
- total reconfiguration from one standard to another, wherein all software modules are reconfigured; and
- partial reconfiguration, which reconfiguration is without changing the operating standard, wherein a subset of the modules are reconfigured.

6. The reconfiguration manager of any preceding claim wherein the reconfigurable system comprises at least one of the baseband subsystem and the RF subsystem of a software defined radio equipment.

7. The reconfiguration manager of claim 6 wherein the software defined radio equipment comprises a portable terminal incorporating mobile telephony function.

8. The reconfiguration manager of claim 6 wherein the software defined radio equipment comprises a base station for a mobile telephone network.

9. The reconfiguration manager according to any preceding claim, in combination with a software library (70) for storing software blocks, wherein each of the modules may be loaded with a software block.

10. The combination of claim 9, wherein the software blocks are received over an air interface by the software defined radio equipment, and stored in the software library (70).

11. The combination according to claim 9 or claim 10 wherein the software library (70) includes a configuration map, the overall module identity, interface, and inter-connection definition list for the standard operating on the equipment.

12. The combination according to any of claims 9-1 lwherein a software download module (68) is provided to control the downloaded software blocks.

13. The reconfiguration manager according to claims 6 and 7 wherein the run-time control signalling handler (72) performs signalling to and from the base station; implements the control signalling required by an air interface agreed for use by the operator and the network; and handles all signalling.

14. The reconfiguration manager according to claims 6 and 7 wherein the run-time monitoring and status handler (74) performs internal monitoring of all baseband (80) and RF subsystem (66) operations; checks on each software block (101, 102) of the baseband and/or RF chains; monitors operation of the software blocks; and reports its findings to the higher authority 64.

15. The reconfiguration manager or combination according to any preceding claim wherein the chains of software modules are reconfigured using an object-oriented approach, whereby the functionality of a given software module can be changed by instantiating appropriate classes and/or re-initialisation of module(s) with new attributes or parameters.

16. The combination according to claim 15 and claim 12 wherein the software download module (68) ensures that the correct software is downloaded by setting appropriate parameters that are associated with required software.

17. The combination according to claim 16 wherein the software download module ensures that the properties of the leaf classes are compliant with the terminal, the standard and the configuration map.

18. The combination according to any of claims 15-17, when dependent on claim 9, wherein, once the leaf class is downloaded and available, the reconfiguration manager (20) will use a valid parameter list to instantiate each required object, and thereby create the required modules (101,102).

19. The reconfiguration manager or combination according to any preceding claim wherein each module contains a Baseband Processing Cell BPC being a generic data processing entity whose functionality is defined by a process class (110), and the constituent modules (42a-42n; 44a-44n) of the software module chain of the reconfigurable system are provided by several instantiations of the BPC class.

20. The reconfiguration manager or combination according to claim 19, wherein each BPC object (modules 42a-42n; 44a-44n) includes set of Input Ports, I, a set of Output Ports, O, Control Methods, C and a virtual process function which implements an instance of the downloaded class.

21. The reconfiguration manager or combination according to claim 20, wherein the BPC class also includes a set of control methods (140) which define the state of the BPC object, the process function (110) of the BPC class being in communication with the input and output ports, and the control methods.

22. The reconfiguration manager or combination according to claim 21, wherein the reconfiguration manager (20) regulates the state of each BPC object by issuing appropriate signals (201) to the respective BPC object.

23. The reconfiguration manager or combination according to claim 9 or any claim dependent on claim 9, wherein the software library (70) contains active and shadow configuration maps, which correspond to active and shadow software module chains of the reconfigurable system, respectively; each configuration map representing the overall definition of the respective reconfiguration, and being a piece of software in itself, which is downloaded when a new standard is to be implemented.

24. The reconfiguration manager or combination according to claim 23; wherein the configuration map comprises:
- a list of software modules with a process definition of each, including type, functionality, algorithmic identity; together with
- interface definitions and interconnections of each software module.

25. A method of performing reconfiguration of a reconfigurable system comprising a plurality of software modules, using a reconfiguration manager according to any preceding claim, wherein the method comprises the steps of:
(a)- the reconfiguration manager (20) accepts a reconfiguration request from the higher authority (64);
(b)- the reconfiguration manager (20) negotiates the reconfiguration request with the higher authority;
(c)- the reconfiguration manager (20) performs a capability check by referring to a property list to ensure that the reconfigurable system is capable of operating according to the negotiated reconfiguration;
(d)- the higher authority (64) instructs the reconfiguration manager (20) to reconfigure a list of software modules;
(e)- the reconfiguration manager (20) creates a reconfigured version of the reconfigurable system by instructing the reconfiguration of the software modules; and
(f)- the reconfigured system becomes the active system, and the former configuration of the reconfigurable system becomes unused.

26. The method of claim 25 wherein step (e) further comprises the steps of:
(ea)- the reconfiguration manager (20) informs the higher authority whether software needs to be downloaded, or whether it intends to use software already present in a library (70);
(eb)- the higher authority instructs a software download module (68) to acquire any required software and then instructs the reconfiguration manager (20) when such software is available in the library;
(ec)- the reconfiguration manager (20) reads the software from the library.

27. The method of claim 25 or claim 26 wherein the reconfigurable system comprises an active chain of software modules, representing the currently active configuration, and a shadow chain of software modules, representing a future configuration under construction, or ready for use.

28. The method of any of claims 25-27 wherein the shadow chain contains new baseband modules and pointer references of the unchanged modules, which are intended to remain from the active chain.

29. The method of any of claims 27-28 wherein step (f) comprises promoting the shadow chain to become the active chain; and to move the former active chain to become the shadow chain in preparation for a next reconfiguration.

30. A method according to claim 27 wherein the reconfiguration manager (20) validates the shadow chains such that they comply with the agreed configuration map in terms of interfaces between neighbouring software modules and their input/output ports.

31. A method according to any of claims 25-30 wherein step (f) is performed only after authorisation by the higher authority, in order to maintain network and standard compliance.

32. A method according to any of claims 25-31 wherein the request of step (a) includes one or more of the following pieces of information:
- which software modules to reconfigure;
- how to reconfigure them;
- configuration map changes;
- run-time control signal changes/modifications.

33. A method according to any of claims 25-32 wherein the negotiation of step (b) includes negotiation of at least one of the following:
- complexity of reconfiguration;
- processing and memory requirements; and
- time duration for reconfiguration.

34. A method according to any of claims 25-33 wherein the instruction of step (d) comprises at least one of the following instructions: a list of software modules to be reconfigured; how to reconfigure them; and when to reconfigure them.

35. The method, reconfiguration manager or combination according to any preceding claim wherein the reconfiguration manager is arranged to perform at least one of the following tasks:
- to define formal procedures and control mechanisms for reconfiguring a reconfigurable system;
- to provide an overall physical layer interface with the higher layers which may themselves be controlled by the higher authority;
- to implement protocols for reconfiguration and regulate appropriate signalling to/from the reconfigurable system and also within it;
- to control the baseband and RF sub-systems of an SDR terminal;
- to negotiate reconfiguration requests with the higher authority;
- to carry out a capability list as part of the reconfiguration request negotiations;
- to calculate the complexity of a given reconfiguration request;
- to administer reconfiguration of the reconfigurable system following successful completion of negotiations with the higher authority;
- to interact with a Software Download Module (SDM) of the equipment, for downloading new software;
- to maintain a library of software;
- to validate the reconfigured reconfigurable system before switching it on;
- to implement incoming higher layer signalling to the reconfigurable system;
- to monitor the run-time performance and status of the reconfigurable system;
- to negotiate reconfiguration;
- to create active and shadow software module chains within the reconfigurable system;
- to control the run-time behaviour of each software module;
- to exert overall control over the physical layer.

## Patentansprüche

1. Ein Umkonfigurierungs-Manager zum Steuern der Umkonfigurierung eines umkonfigurierbaren Systems, bestehend aus:
- einem Umkonfigurierungs-Handler (62) zum Empfangen von Umkonfigurierungs-Instruktionen von einer höheren Autorität (64) ;
- einem Laufzeit-Steuerungssignalisierungs-Handler (72), zuständig für das Implementieren der Umkonfigurierung des umkonfigurierbaren Systems; und
- einem Laufzeit-überwachungs- und Zustands-Handler (74) zum Implementieren von Statusanforderungen bei dem umkonfigurierbaren System und zum Lesen von Bestätigungen und Statusinformationen von dem umkonfigurierbaren System,
**dadurch gekennzeichnet, dass** der Umkonfigurierungs-Manager eine aktive Kette aus Softwarebausteinen, die momentane Konfiguration repräsentiert, und eine Schattenkette aus Softwarebausteinen, die eine zukünftige Umkonfigurierung repräsentiert, umfasst, wobei der Umkonfigurierungs-Manager außerdem einen Umkonfigurierungsschalter (78) enthält, der die Schattenkette (52, 54) einschalten (ON) und die aktive Kette (42, 44) ausschalten kann (OFF), wodurch die Schattenkette zu einer neuen aktiven Kette und die frühere aktive Kette zu einer Schattenkette, bereit zum Ersetztwerden durch eine neue Schattenkonfiguration, wird.

2. Der Umkonfigurierungs-Manager gemäß Anspruch 1, wobei der Umkonfigurierungs-Handler (62) mit der Umkonfigurierung des umkonfigurierbaren Systems einschließlich der zugehörigen Signalisierung und Verhandlungen befasst ist und mit der höheren Autorität (64) kommuniziert.

3. Der Umkonfigurierungs-Manager gemäß Anspruch 1 oder Anspruch 2, wobei der Laufzeitsteuerungs-Signalisierungs-Handler (72)
- die Signalisierung höherer Schichten und die Steuerungssignalisierung implementiert;
- mit der Laufzeitsignalisierung befasst ist, welche standardspezifisch ist;
- Signale vom Umkonfigurierungs-Handler (62) empfängt, um das Verhalten des umkonfigurierbaren Systems zu regulieren, während dieses umkonfiguriert wird;
- Modifikationen in der Laufzeit-Steuerungssignalisierung liefert; und
- mit der höheren Autorität (64) und dem umkonfigurierbaren System (80) kommuniziert und Signale von dem Umkonfigurierungs-Handler (62) empfängt.

4. Der Umkonfigurierungs-Manager gemäß einem beliebigen der Ansprüche 1 bis 3, wobei der Laufzeit-Überwachungs- und Zustands-Handler (74)
- Laufzeit-Statusanforderungen bei dem umkonfigurierbaren System (80) implementiert;
- die entsprechenden Bestätigungen liest;
- das Laufzeitverhalten des umkonfigurierbaren Systems überblickt;
- Hilfsausgänge von dem umkonfigurierbaren System zusammenfasst;
- an die höhere Autorität (64) berichtet; und
- mit der höheren Autorität, dem Umkonfigurierungs-Handler (62) und dem umkonfigurierbaren System (80) kommuniziert.

5. Der Umkonfigurierungs-Manager gemäß einem beliebigen der vorstehenden Ansprüche, wobei das umkonfigurierbare System eine Kette aus umkonfigurierbaren Softwarebausteinen enthält und die Umkonfigurierung eine der folgenden ist:
- totale Umkonfigurierung von einem Standard auf einen anderen, wobei alle Softwarebausteine umkonfiguriert werden; und
- partielle Umkonfigurierung, wobei der momentan benutzte Standard nicht gewechselt wird und wobei eine Teilmenge der Bausteine umkonfiguriert wird.

6. Der Umkonfigurierungs-Manager gemäß einem beliebigen der vorstehenden Ansprüche, wobei das umkonfigurierbare System mindestens ein Basisband-Subsystem oder ein HF-Subsystem einer SDR-Einrichtung umfasst.

7. Der Umkonfigurierungs-Manager gemäß Anspruch 6, wobei die SDR-Einrichtung ein portables Endgerät mit Mobiltelefonie-Funktion umfasst.

8. Der Umkonfigurierungs-Manager gemäß Anspruch 6, wobei die SDR-Einrichtung eine Basisstation für ein Mobiltelefonnetz umfasst.

9. Der Umkonfigurierungs-Manager gemäß einem beliebigen der vorstehenden Ansprüche, in Kombination mit einer Software-Bibliothek (70) zum Speichern von Software-Blöcken, wobei jeder der Bausteine mit einem Software-Block geladen werden kann.

10. Die Kombination gemäß Anspruch 9, wobei die Software-Blöcke über eine Luftschnittstelle von der SDR-Einrichtung empfangen und in der Software-Bibliothek (70) gespeichert werden.

11. Die Kombination gemäß Anspruch 9 oder Anspruch 10, wobei die Software-Bibliothek (70) einen Konfigurationsplan, die Gesamtdefinitionsliste der Baustein-Identität, Schnittstellen und Verbindungen für den Normalbetrieb der Einrichtung enthält.

12. Die Kombination gemäß einem beliebigen der Ansprüche 9 bis 11, wobei ein Software-Download-Baustein (68) zum Steuern der heruntergeladenen Software-Blöcke vorhanden ist.

13. Der Umkonfigurierungs-Manager gemäß den Ansprüchen 6 und 7, wobei der Laufzeitsteuerungs-Signalisierungs-Handler (72) die Signalisierung zu und von der Basisstation durchführt, die von einer Luftschnittstelle geforderte und zur Nutzung durch den Bediener und das Netz vereinbarte Steuerungssignalisierung implementiert und die gesamte Signalisierung behandelt.

14. Der Umkonfigurierungs-Manager gemäß den Ansprüchen 6 und 7, wobei der Laufzeit-Überwachungs- und -Zustands-Handler (74) eine interne Überwachung aller Aktivitäten des Basisband- (80) und des HF-Subsystems (66) durchführt, jeden Software-Block (101, 102) der Basisband- und/oder HF-Ketten prüft, die Arbeit der Software-Blöcke überwacht und seine Erkenntnisse an die höhere Autorität 64 meldet.

15. Der Umkonfigurierungs-Manager oder die Kombination gemäß einem beliebigen der vorstehenden Ansprüche, wobei die Ketten von Softwarebausteinen auf der Basis eines objektorientierten Ansatzes umkonfiguriert werden, womit die Funktionalität eines gegebenen Softwarebausteins durch Instantiieren geeigneter Klassen und/oder durch Neu-Initialisieren eines oder mehrerer Bausteine mit neuen Attributen oder Parametern verändert wird.

16. Die Kombination gemäß Anspruch 15 und Anspruch 12, wobei der Software-Download-Baustein (68) durch Setzen passender Parameter, die zu der benötigten Software gehören, sicherstellt, dass die richtige Software heruntergeladen wird.

17. Die Kombination gemäß Anspruch 16, wobei der Software-Download-Baustein sicherstellt, dass die Eigenschaften der Blattklassen verträglich mit dem Endgerät, dem Standard und dem Konfigurationsplan sind.

18. Die Kombination gemäß einem beliebigen von Anspruch 9 abhängenden Anspruch der Ansprüche 15 bis 17, wobei der Umkonfigurierungs-Manager (20) - sobald die Blattklasse heruntergeladen und verfügbar ist - eine gültige Parameterliste zum Instantiieren jedes benötigten Objekts benutzt und damit die benötigten Bausteine (101, 102) erzeugt.

19. Der Umkonfigurierungs-Manager oder die Kombination gemäß einem beliebigen der vorstehenden Ansprüche, wobei jeder Baustein eine Basisband-Verarbeitungs-Zelle BPC enthält, welche eine generische Datenverarbeitungseinheit ist, deren Funktionalität von einer Verarbeitungsklasse (110) definiert wird und wobei die konstituierenden Bausteine (42a bis 42n; 44a bis 44n) der Softwarebaustein-Kette des umkonfigurierbaren Systems durch mehrere Instantiierungen der BPC-Klasse erzeugt werden.

20. Der Umkonfigurierungs-Manager oder die Kombination gemäß Anspruch 19, wobei jedes BPC-Objekt (Bausteine 42a bis 42n; 44a bis 44n) einen Satz I von Eingangsports, einen Satz O von Ausgangsports, Steuermethoden C und eine virtuelle Verarbeitungsfunktion enthält, welche eine Instanz der heruntergeladenen Klasse implementiert.

21. Der Umkonfigurierungs-Manager oder die Kombination gemäß Anspruch 20, wobei die BPC-Klasse außerdem einen Satz von Steuerungsmethoden (140) enthält, die den Zustand des BPC-Objekts definieren, und wobei die Verarbeitungsfunktion (110) der BPC-Klasse mit den Eingangs- und den Ausgangsports sowie mit den Steuerungsmethoden kommuniziert.

22. Der Umkonfigurierungs-Manager oder die Kombination gemäß Anspruch 21, wobei der Umkonfigurierungs-Manager (20) den Zustand jedes BPC-Objekts durch Senden geeigneter Signale (201) an das jeweilige BPC-Objekt reguliert.

23. Der Umkonfigurierungs-Manager oder die Kombination gemäß Anspruch 9 oder einem beliebigen von Anspruch 9 abhängenden Anspruch, wobei die Software-Bibliothek (70) Konfigurationspläne für aktive und für Schattenkonfigurationen enthält, welche Pläne mit aktiven Softwarebausteinketten bzw. Softwarebaustein-Schattenketten des umkonfigurierbaren Systems korrespondieren, und wobei jeder Konfigurationsplan die Gesamtdefinition der betreffenden Umkonfigurierung repräsentiert und selbst eine Software ist, die heruntergeladen wird, wenn ein neuer Standard zu implementieren ist.

24. Der Umkonfigurierungs-Manager oder die Kombination gemäß Anspruch 23, wobei der Konfigurationsplan enthält
- eine Liste von Softwarebausteinen mit einer Verarbeitungsdefinition für jeden davon (einschließlich Typ, Funktionalität, algorithmische Identität); zusammen mit
- Definitionen der Schnittstellen und Verbindungen jedes Softwarebausteins.

25. Ein Verfahren zum Durchführen der Umkonfigurierung eines eine Mehrzahl von Softwarebausteinen umfassenden, umkonfigurierbaren Systems unter Benutzung eines Umkonfigurierungs-Managers gemäß einem beliebigen der vorstehenden Ansprüche, wobei das Verfahren folgende Schritte umfasst:
(a)- Der Umkonfigurierungs-Manager (20) empfängt eine Umkonfigurierungs-Anforderung von der höheren Autorität (64).
(b)- Der Umkonfigurierungs-Manager (20) handelt die Umkonfigurierungs-Anforderung mit der höheren Autorität aus.
(c)- Der Umkonfigurierungs-Manager (20) führt eine Fähigkeitsprüfung durch, indem er eine Eigenschaftsliste betrachtet um sicherzustellen, dass das umkonfigurierbare System fähig ist, gemäß der verhandelten Umkonfigurierung zu arbeiten.
(d)- Die höhere Autorität (64) instruiert den Umkonfigurierungs-Manager (20) dahingehend, eine Liste von Softwarebausteinen umzukonfigurieren;
(e)- Der Umkonfigurierungs-Manager (20) erzeugt eine umkonfigurierte Version des umkonfigurierbaren Systems, indem er die Umkonfigurierung der Softwarebausteine befiehlt.
(f)- Das umkonfigurierte System wird zum aktiven System, und die vorherige Konfiguration des umkonfigurierbaren Systems wird nicht mehr weiter benutzt.

26. Das Verfahren gemäß Anspruch 25, wobei Schritt (e) zusätzlich folgende Schritte umfasst:
(ea)- Der Umkonfigurierungs-Manager (20) informiert die höhere Autorität, ob Software heruntergeladen werden muss oder ob er beabsichtigt, bereits in einer Bibliothek (70) vorhandene Software zu verwenden.
(eb)- Die höhere Autorität instruiert einen Software-Download-Baustein (68) dahingehend, jede benötigte Software zu beschaffen, und instruiert anschließend den Umkonfigurierungs-Manager (20), wenn diese Software in der Bibliothek verfügbar ist.
(ec)- Der Umkonfigurierungs-Manager (20) liest die Software aus der Bibliothek.

27. Das Verfahren gemäß Anspruch 25 oder Anspruch 26, wobei das umkonfigurierbare System eine aktive Kette aus Softwarebausteinen, welche die momentan aktive Konfiguration repräsentiert, und eine Schattenkette von Softwarebausteinen, welche eine zukünftige Konfiguration, die noch unvollständig oder bereits nutzungsfertig ist, repräsentiert.

28. Das Verfahren gemäß einem beliebigen der Ansprüche 25 bis 27, wobei die Schattenkette neue Basisbandbausteine und Zeigerverweise der unveränderten Bausteine enthält, die im Vergleich zur aktiven Kette unverändert bleiben sollen.

29. Das Verfahren gemäß einem beliebigen der Ansprüche 27 bis 28, wobei Schritt (f) die Aktivitäten umfasst, als Vorbereitung für eine nächstfolgende weitere Umkonfigurierung die Schattenkette zur aktiven Kette und die vorher aktive Kette zur Schattenkette zu machen.

30. Ein Verfahren gemäß Anspruch 27, wobei der Umkonfigurierungs-Manager (20) die Schattenketten daraufhin prüft, ob sie mit dem vereinbarten Konfigurationsplan hinsichtlich Schnittstellen zwischen benachbarten Softwarebausteinen und deren Eingangs-/Ausgangsports verträglich sind.

31. Ein Verfahren gemäß einem beliebigen der Ansprüche 25 bis 30, wobei Schritt (f) nur nach Autorisierung durch die höhere Autorität durchgeführt wird, um die Verträglichkeit mit dem Netz und dem Standard aufrechtzuerhalten.

32. Ein Verfahren gemäß einem beliebigen der Ansprüche 25 bis 31, wobei die Anforderung des Schritts (a) eine oder mehrere der folgenden Informationen umfasst:
- Welche Softwarebausteine umkonfiguriert werden sollen
- Wie sie umkonfiguriert werden sollen
- Konfigurationsplan-Änderungen
- Änderungen/Modifikationen der Laufzeit-Steuerungssignale.

33. Ein Verfahren gemäß einem beliebigen der Ansprüche 25 bis 32, wobei das Verhandeln im Schritt (b) das Verhandeln mindestens einer der folgenden Dinge umfasst:
- Komplexität der Umkonfigurierung
- Anforderungen hinsichtlich Verarbeitung und Speicherplatz
- Zeitbedarf der Umkonfigurierung

34. Ein Verfahren gemäß einem beliebigen der Ansprüche 25 bis 33, wobei das Instruieren in Schritt (d) mindestens eine der folgenden Instruktionen umfasst: eine Liste von Softwarebausteinen, die umkonfiguriert werden sollen; Angaben, wie sie umkonfiguriert werden sollen; Angaben, wann sie umkonfiguriert werden sollen.

35. Das Verfahren, der Umkonfigurierungs-Manager oder die Kombination gemäß einem beliebigen der vorstehenden Ansprüche, wobei der Umkonfigurierungs-Manager dafür konzipiert ist, mindestens eine der folgenden Aufgaben durchzuführen:
- Definieren formaler Prozeduren und Steuerungsmechanismen zum Umkonfigurieren eines umkonfigurierbaren Systems
- Bereitstellen einer die physikalische Schicht ganz erfassenden Schnittstelle zu den höheren Schichten, welche selbst von der höheren Autorität gesteuert werden können
- Implementieren von Protokollen zur Umkonfigurierung und regulieren der entsprechenden Signalisierung zum/vom umkonfigurierbaren System und auch innerhalb dieses
- Steuern der Basisband- und HF-Subsysteme eines SDR-Endgeräts
- Verhandeln von Umkonfigurierungs-Anforderungen mit der höheren Autorität
- Umsetzen einer Fähigkeitenliste als Teil des Verhandelns der Umkonfigurierungs-Anforderungen
- Berechnen der Komplexität einer bestimmten Umkonfigurierungs-Anforderung
- Administrieren der Umkonfigurierung des umkonfigurierbaren Systems nach erfolgreichem Abschluss von Verhandlungen mit der höheren Autorität
- Interagieren mit einem Software-Download-Baustein (SDM) der Einrichtung zwecks Herunterladen neuer Software;
- Unterhalten einer Software-Bibliothek
- Prüfen des umkonfigurierten umkonfigurierbaren Systems, bevor dieses eingeschaltet wird
- Implementieren ankommender Signalisierung aus höheren Schichten hin zum umkonfigurierbaren System
- Überwachen der Laufzeit-Leistung und des Zustands des umkonfigurierbaren Systems
- Verhandeln von Umkonfigurierungen
- Erzeugen von aktiven Ketten und von Schattenkette aus Softwarebausteinen innerhalb des umkonfigurierbaren Systems
- Steuern des Laufzeitverhaltens jedes Softwarebausteins
- Ausüben der Gesamtkontrolle über die physikalische Schicht

## Revendications

1. Gestionnaire de reconfiguration pour contrôler la reconfiguration d'un système reconfigurable :
- un module de reconfiguration (62) pour recevoir des instructions de reconfiguration d'une autorité supérieure (64) ;
- un module de signalisation de contrôle d'exécution (72) responsable de la mise en oeuvre de la reconfiguration du système reconfigurable, et
- un module de surveillance et d'état d'exécution (74) pour mettre en oeuvre les demandes d'état sur le système reconfigurable et pour lire les accusés de réception et les informations d'état provenant du système reconfigurable,
**caractérisé en ce que** le gestionnaire de reconfiguration est constitué d'une chaîne active de modules logiciels, représentant la configuration en vigueur, et d'une chaîne fantôme de modules logiciels, représentant une future reconfiguration,
et **en ce que** le gestionnaire de reconfiguration comprend en outre un commutateur de reconfiguration (78) utilisable pour commuter la chaîne fantôme (52, 54) sur ON (activée) et la chaîne active (42, 44) sur OFF (désactivée), la chaîne fantôme devenant par là une nouvelle chaîne active et l'ancienne chaîne active devenant une chaîne fantôme, prête à être remplacée par une nouvelle configuration fantôme.

2. Gestionnaire de reconfiguration selon la revendication 1 dans lequel le module de reconfiguration (62) prend en charge la reconfiguration du système reconfigurable, en ce compris la signalisation et les négociations y relatives, et est en communication avec l'autorité supérieure (64).

3. Gestionnaire de reconfiguration selon la revendication 1 ou la revendication 2 dans lequel le module de signalisation de contrôle d'exécution (72) :
- met en oeuvre la signalisation des couches supérieures et la signalisation de contrôle ;
- prend en charge la signalisation d'exécution, qui sera spécifique de la norme ;
- reçoit des signaux du module de reconfiguration (62) afin de réguler le comportement du système reconfigurable pendant qu'il est reconfiguré ;
- réalise des modifications de la signalisation de contrôle d'exécution, et
- est en communication avec l'autorité supérieure (64), le système reconfigurable (80) et reçoit des signaux du module de reconfiguration (62).

4. Gestionnaire de reconfiguration selon l'une quelconque des revendications 1 à 3 dans lequel le module de surveillance et d'état d'exécution (74) :
- met en oeuvre les demandes d'état d'exécution sur le système reconfigurable (80) ;
- lit les accusés de réception respectifs ;
- surveille le comportement d'exécution du système reconfigurable ;
- interclasse des sorties auxiliaires du système reconfigurable ;
- fait rapport à l'autorité supérieure (64), et
- est en communication avec l'autorité supérieure, le module de reconfiguration (62) et le système reconfigurable (80).

5. Gestionnaire de reconfiguration selon l'une quelconque des revendications précédentes dans lequel le système reconfigurable est constitué par une chaîne de modules logiciels reconfigurables et la reconfiguration consiste :
- soit en une reconfiguration totale d'une norme en une autre, tous les modules logiciels étant reconfigurés,
- soit en une reconfiguration partielle, laquelle reconfiguration se fait sans changement de la norme en service, un sous-ensemble des modules étant reconfigurés.

6. Gestionnaire de reconfiguration selon l'une quelconque des revendications précédentes dans lequel le système reconfigurable est constitué par au moins soit le sous-système de bande de base, soit le sous-système RF d'un équipement à radio logicielle.

7. Gestionnaire de reconfiguration selon la revendication 6 dans lequel l'équipement à radio logicielle est constitué par un terminal portatif contenant une fonction de téléphonie mobile.

8. Gestionnaire de reconfiguration selon la revendication 6 dans lequel l'équipement à radio logicielle est constitué par une station de base pour réseau de téléphones mobiles.

9. Gestionnaire de reconfiguration selon l'une quelconque des revendications précédentes, en combinaison avec une bibliothèque de logiciels (70) pour stocker des blocs logiciels, un bloc logiciel pouvant être chargé dans chacun des modules.

10. Combinaison selon la revendication 9, dans laquelle les blocs logiciels sont reçus sur une interface radio par l'équipement à radio logicielle et stockés dans la bibliothèque de logiciels (70).

11. Combinaison selon la revendication 9 ou la revendication 10 dans laquelle la bibliothèque de logiciels (70) comprend une mappe de configuration, la liste des définitions globales de l'identité, des interfaces et des interconnexions des modules pour la norme en service sur l'équipement.

12. Combinaison selon l'une quelconque des revendications 9 à il dans laquelle un module de téléchargement de logiciels (68) est prévu pour contrôler les blocs logiciels téléchargés.

13. Gestionnaire de reconfiguration selon les revendications 6 et 7 dans lequel le module de signalisation de contrôle d'exécution (72) exécute la signalisation à destination et en provenance de la station de base, met en oeuvre la signalisation de contrôle requise par une interface radio dont l'utilisation est acceptée par l'opérateur et le réseau, et prend en charge toute la signalisation.

14. Gestionnaire de reconfiguration selon les revendications 6 et 7 dans lequel le module de surveillance et d'état d'exécution (74) exécute la surveillance interne de toutes les opérations des sous-systèmes de bande de base (80) et RF (66), vérifie chaque bloc logiciel (101, 102) des chaînes en bande de base et/ou RF, surveille le fonctionnement des blocs logiciels et rapporte ses observations à l'autorité supérieure 64.

15. Gestionnaire de reconfiguration ou combinaison selon l'une quelconque des revendications précédentes dans lequel ou laquelle les chaînes de modules logiciels sont reconfigurées en utilisant une approche orientée objet, ce par quoi la fonctionnalité d'un module logiciel donné peut être changée en instanciant des classes appropriées et/ou par réinitialisation de module(s) avec de nouveaux attributs ou paramètres.

16. Combinaison selon la revendication 15 et la revendication 12 dans laquelle le module de téléchargement de logiciels (68) s'assure que le bon logiciel est téléchargé en définissant des paramètres appropriés qui sont associés au logiciel requis.

17. Combinaison selon la revendication 16 dans laquelle le module de téléchargement de logiciels s'assure que les propriétés des classes feuilles sont conformes au terminal, à la norme et à la mappe de configuration.

18. Combinaison selon l'une quelconque des revendications 15 à 17, lorsqu'elles dépendent de la revendication 9, dans laquelle, une fois que la classe feuille a été téléchargée et est disponible, le gestionnaire de reconfiguration (20) utilise une liste de paramètres valides pour instancier chaque objet requis et créer par là les modules requis (101, 102).

19. Gestionnaire de reconfiguration ou combinaison selon l'une quelconque des revendications précédentes, dans lequel ou laquelle chaque module contient une cellule de traitement en bande de base (BPC), celle-ci étant une entité générique de traitement de données dont la fonctionnalité est définie par une classe de processus (110), et les modules constitutifs (42a-42n, 44a-44n) de la chaîne de modules logiciels du système reconfigurable sont produits par plusieurs instanciations de la classe BPC.

20. Gestionnaire de reconfiguration ou combinaison selon la revendication 19, dans lequel ou laquelle chaque objet BPC (modules 42a-42n, 44a-44n) comprend une série de ports d'entrée, I, une série de ports de sortie, O, des procédés de contrôle, C, et une fonction formant processus virtuel qui met en oeuvre une instance de la classe téléchargée.

21. Gestionnaire de reconfiguration ou combinaison selon la revendication 20, dans lequel ou laquelle la classe BPC comprend aussi une série de procédés de contrôle (140) qui définissent l'état de l'objeet BPC, la fonction de processus (110) de la classe PBC étant en communication avec les ports d'entrée et de sortie, et les procédés de contrôle.

22. Gestionnaire de reconfiguration ou combinaison selon la revendication 21, dans lequel ou laquelle le gestionnaire de reconfiguration (20) régule l'état de chaque objet BPC en émettant des signaux appropriés (201) destinés à l'objet BPC respectif.

23. Gestionnaire de reconfiguration ou combinaison selon la revendication 9 ou l'une quelconque des revendications dépendant de la revendication 9, dans lequel ou laquelle la bibliothèque de logiciels (70) contient des mappes active et fantôme de configuration qui correspondent à des chaînes, respectivement, active et fantôme de modules logiciels du système reconfigurable, chaque mappe de configuration représentant la définition globale de la reconfiguration respective et étant un élément logiciel en soi qui est téléchargé lorsqu'une nouvelle norme doit être mise en oeuvre.

24. Gestionnaire de reconfiguration ou combinaison selon la revendication 23, dans lequel ou laquelle la mappe de configuration comprend :
- une liste de modules logiciels comportant une définition de processus de chacun, en ce compris le type, la fonctionnalité, l'identité algorithmique, ainsi que
- des définitions d'interfaces et des interconnexions de chaque module logiciel.

25. Procédé d'exécution de la reconfiguration d'un système reconfigurable constitué d'une pluralité de modules logiciels, utilisant un gestionnaire de reconfiguration selon l'une quelconque des revendications précédentes, le procédé comprenant les étapes consistant en ce que :
(a) le gestionnaire de reconfiguration (20) accepte une demande de reconfiguration de l'autorité supérieure (64) ;
(b) le gestionnaire de reconfiguration (20) négocie la demande de reconfiguration avec l'autorité supérieure ;
(c) le gestionnaire de reconfiguration (20) exécute un contrôle de capacité en se référant à une liste de propriétés pour s'assurer que le système reconfigurable est capable de fonctionner selon la reconfiguration négociée ;
(d) l'autorité supérieure (64) donne instruction au gestionnaire de reconfiguration (20) de reconfigurer une liste de modules logiciels ;
(e) le gestionnaire de reconfiguration (20) crée une version reconfigurée du système reconfigurable en donnant instruction de reconfigurer les modules logiciels, et
(f) le système reconfiguré devient le système actif et l'ancienne configuration du système reconfigurable devient inutilisée.

26. Procédé selon la revendication 25 dans lequel l'étape (e) comprend en outre les étapes consistant en ce que :
(ea) le gestionnaire de reconfiguration (20) informe l'autorité supérieure de la nécessité de télécharger un logiciel ou de son intention d'utiliser un logiciel déjà présent dans une bibliothèque (70) ;
(eb) l'autorité supérieure donne instruction à un module de téléchargement de logiciels (68) d'acquérir tout logiciel requis et ensuite, avertit le gestionnaire de reconfiguration (20) lorsque ce logiciel est disponible dans la bibliothèque ;
(ec) le gestionnaire de reconfiguration (20) lit le logiciel dans la bibliothèque.

27. Procédé selon la revendication 25 ou la revendication 26 dans lequel le système reconfigurable est constitué d'une chaîne active de modules logiciels, représentant la configuration actuellement active, et d'une chaîne fantôme de modules logiciels, représentant une future configuration en cours de construction ou prête à être utilisée.

28. Procédé selon l'une quelconque des revendications 25 à 27 dans lequel la chaîne fantôme contient de nouveaux modules de bande de base et des références formant pointeurs des modules inchangés qui sont censés subsister de la chaîne active.

29. Procédé selon l'une quelconque des revendications 27 et 28 dans lequel l'étape (f) consiste à inciter la chaîne fantôme à devenir la chaîne active et à amener l'ancienne chaîne active à devenir la chaîne fantôme en prévision d'une prochaine reconfiguration.

30. Procédé selon la revendication 27 dans lequel le gestionnaire de reconfiguration (20) valide les chaînes fantômes de telle sorte qu'elles soient conformes à la mappe de configuration acceptée quant aux interfaces entre modules logiciels voisins et à leurs ports d'entrée/sortie.

31. Procédé selon l'une quelconque des revendications 25 à 30 dans lequel l'étape (f) est exécutée uniquement après autorisation de l'autorité supérieure afin de préserver la conformité au réseau et à la norme.

32. Procédé selon l'une quelconque des revendications 25 à 31 dans lequel la demande de l'étape (a) comprend une ou plusieurs des informations suivantes :
- quels sont les modules logiciels à reconfigurer ;
- comment les reconfigurer ;
- changements de la mappe de configuration ;
- changements/modifications des signaux de contrôle d'exécution.

33. Procédé selon l'une quelconque des revendications 25 à 32 dans lequel la négociation de l'étape (b) comprend la négociation d'au moins l'un des points suivants :
- complexité de la reconfiguration ;
- exigences en matière de traitement et de mémoire, et
- temps que durera la reconfiguration.

34. Procédé selon l'une quelconque des revendications 25 à 33 dans lequel l'instruction de l'étape (d) comprend au moins l'une des instructions suivantes : une liste de modules logiciels à reconfigurer, comment les reconfigurer et quand les reconfigurer.

35. Procédé, gestionnaire de reconfiguration ou combinaison selon l'une quelconque des revendications précédentes dans lesquels le gestionnaire de reconfiguration est agencé pour exécuter au moins l'une des tâches suivantes :
- définir des procédures formelles et des mécanismes de contrôle pour reconfigurer un système reconfigurable ;
- aménager une interface globale de couche physique avec les couches supérieures qui peuvent être elles-mêmes contrôlées par l'autorité supérieure ;
- mettre en oeuvre des protocoles de reconfiguration et réguler la signalisation appropriée à destination/en provenance du système reconfigurable et aussi en son sein ;
- contrôler les sous-systèmes de bande de base et RF d'un terminal SDR ;
- négocier les demandes de reconfiguration avec l'autorité supérieure ;
- exécuter une liste de capacité en tant que partie des négociations sur la demande de reconfiguration ;
- calculer la complexité d'une demande de reconfiguration donnée ;
- administrer la reconfiguration du système reconfigurable après que les négociations avec l'autorité supérieure ont été menées à bonne fin ;
- interagir avec un module de téléchargement de logiciels (SDM) de l'équipement pour télécharger un nouveau logiciel ;
- tenir une bibliothèque de logiciels ;
- valider le système reconfigurable reconfiguré avant de l'activer ;
- mettre en oeuvre une signalisation entrante de couches supérieures à destination du système reconfigurable ;
- surveiller les performances et l'état d'exécution du système reconfigurable ;
- négocier la reconfiguration ;
- créer des chaînes active et fantôme de modules logiciels au sein du système reconfigurable ;
- contrôler le comportement d'exécution de chaque module logiciel ;
- exercer un contrôle global sur la couche physique.
